**Europäisches Patentamt**

**European Patent Office**

**Office européen des brevets**

(11) Publication number: **0 002 565**
**B1**

(12) # EUROPEAN PATENT SPECIFICATION

(45) Date of publication of patent specification: **01.04.81**

(51) Int. Cl.³: **G 02 B 5/14**

(21) Application number: **78300600.0**

(22) Date of filing: **07.11.78**

(54) Optical fibre connectors.

(30) Priority: **19.12.77 US 862077**

(43) Date of publication of application:
**27.06.79 Bulletin 79/13**

(45) Publication of the grant of the European patent:
**01.04.81 Bulletin 81/13**

(84) Designated Contracting States:
**DE FR GB**

(56) References cited:
**DE - A - 2 616 876**
**DE - A - 2 708 369**
**FR - A - 2 305 747**
**US - A - 3 984 174**
**US - A - 3 999 837**
**US - A - 4 056 305**

(73) Proprietor: **International Business Machines Corporation**
**Armonk, N.Y. 10504 (US)**

(72) Inventor: **Cefarelli, Frank Paul**
**1 Styvestandt Drive**
**Poughkeepsie New York 12601 (US)**
Inventor: **Evans, Robert Thomas**
**83 Alda Drive**
**Poughkeepsie New York 12603 (US)**

(74) Representative: **Lewis, Alan J.**
**IBM United Kingdom Patent Operations Hursley Park**
**Winchester, Hants, SO21 2JN (GB)**

Courier Press, Leamington Spa, England.

Optical fibre connectors

The invention relates to connectors for optically coupling together in end-to-end relationship, at least one pair of elongated light transmitting elements, such as glass fibres.

The advance of fibre optic technology from the laboratory into the practical application realm requires, among other items, reproducible hardware. One of the items of hardware required is a multi-position connector which can optically and physically connect pairs of individual fibres. The connector required should be able to be repeatedly connected and disconnected over its intended life, for example, 50 to 500 insertions and withdrawals without substantially changing the optical characteristics. We have found that there can be considerable losses in the light passing between two fibres because of axial offset of the optically interconnected fibres and because of any angularity offset, that is, the fibre ends do not meet in a plane vertical to the axis thereof. Further losses can be due to any gap between the end faces of the interconnected fibres. These light loss problems are further aggravated if, in a multi-fibre connector, the mating parts are not perfectly positioned but are slightly axially offset because of the machining or molding tolerances involved in the manufacture thereof.

U.S. specification No. 4,008,948 discloses a connector optically coupling together pairs of optical fibres in end-to-end relationship. The connector comprises two releasably engagable coupling parts, one part providing a socket in which an end portion of one of the pairs of optical fibres is centred and the other coupling part providing a male member in which an end portion of the other optical fibre is centred. As the coupling parts are engaged and physically coupled together, an optical coupling is effected between the two fibres.

DE-A-2 708 369 similarly discloses a connector comprising two releasably engagable coupling parts, the ends of the optical elements being respectively centered in the two coupling parts. One coupling part has a conical recess or socket at its end which engages with the other coupling part and the other coupling part has a resilient elastomeric insert at its engaged end which provides a conical projection to inter-fit with the conical recess. As the two coupling parts are engaged, the elastomeric insert is pressed back into the other coupling part to allow the end of the optical element centered therein to project into optical coupling relationship with the other optical element.

The present invention is concerned with the provision of a connector for optical fibres or like light transmitting elements which connector provides reliable optical coupling of light between the coupled optical elements, and which connector can be repeatedly coupled and un-coupled without substantially changing the optical coupling or damaging the elements.

The invention provides a connector for optically coupling together in end-to-end relationship a pair of elongated light transmitting elements, said connector comprising two releasably engagable coupling parts, one coupling part providing a socket in which an end portion of one of the pair of light elements is centred, the other coupling part providing a spigot in which an end portion of the other light element is centred and said coupling parts having co-acting, tapering surfaces centering the spigot in the socket, characterised in that the co-acting tapering surface on the said other coupling part is spaced from the projecting end of the spigot and in that the spigot is sufficiently flexible to permit any necessary deformation thereof as the spigot is centred in the socket by the co-action of the tapering surfaces.

U.S. specification No. 3,999,837 discloses a connector assembly for optically coupling together in end-to-end relationship a multiplicity of pairs of elongated light transmitting elements. The connector assembly comprises releasably engagable coupling parts, each coupling part providing a multiplicity of sockets in each of which an end portion of a respective one of the multiplicity of pairs of light elements is centred. One coupling part has two rigid, tapered spigots and the other coupling part has two sockets into which the spigots fit. When the spigots are engaged in the sockets, the end faces of each pair of light elements are aligned with and abut against each other.

Multi-position connector halves, i.e. the two coupling parts, cannot be machined or moulded such that the multiple connection positions have 100 per cent positional accuracy. Thus, in a rigid construction there is a substantial likelihood that some mis-registration of abutting ends will occur. The Applicants invention is concerned, in one of its aspects, with this mis-registration problem that can occur in a multi-position connector.

Accordingly the invention provides a connector for optically coupling together in end-to-end relationship a multiplicity of pairs of elongated light transmitting elements, said connector comprising two releasably engagable coupling parts one coupling part providing a multiplicity of sockets and/or spigots in each of which an end portion of a respective one of the multiplicity of pairs of light elements is centred; the other coupling part providing a multiplicity of spigots and/or sockets in each of which an end portion of a respective one of the other multiplicity of light elements is centred and said coupling parts having a multiplicity of co-acting, pairs of tapering surfaces, one for each pair of light elements, centering each spigot in its socket, characterised in that the co-acting tapering surface on each spigot is spaced from the projecting end of the spigot and in that each spigot is sufficiently flexible to permit any necessary deformation thereof as all the spigot are centred simultaneously in their appropriate sockets by the co-action of the respective tapering surfaces.

An example of a connector in accordance with and embodying the invention claimed, will now be described in detail, by way of example, with reference to the accompanying drawings, in which:—

Figure 1 is an elevation of one coupling part of the connector,

Figure 2 is a section view through the connector, the coupling part shown in Fig. 1 being sectioned on the line 2—2,

Figure 3 is a fragmentary perspective view of a portion of the coupling part shown in Fig. 1.

Figure 4 is a schematic representation of an initially mis-aligned male member engaged in a female socket,

Figure 5 is a schematic representation showing two male members engaged in two sockets, one pair of optical elements having a gap therebetween.

The connector to be described permits the interconnecting of a plurality of pairs of optical fibres with relatively low light losses and with connections which can be broken and remade many times while still maintaining the low loss characteristics.

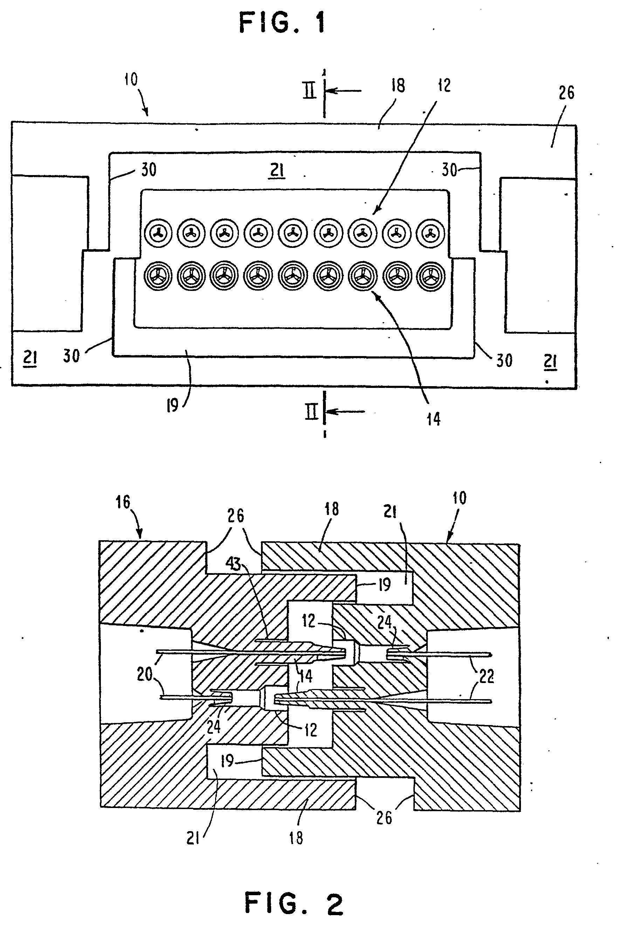

Figure 1 shows a coupling part 10 which provides a longitudinal row of sockets 12 and a similar row of flexible male members 14, each of which is laterally aligned with one of the sockets. The coupling part or housing half 10 is formed, for example by machining or molding, to be symmetrical about an axis mid-way between the rows so that a second similar housing half 16, rotated through 180°, can be mated therewith. The housing half 10 is a relatively loose sliding fit with the other housing half 16. When the housing halves 10, 16 are slidingly fitted together the male members 14 of the one housing half are aligned with the sockets 12 of the other housing half. Figure 2 shows a cross-sectional view of the housing half 10 of Fig 1 partially mated with the 180° rotated, second housing half 16 showing the loose inter-fit of the keying members 18 of the housing halves with one another. This inter-fit is such as to provide aligned positioning of the male members 14 with the opposite sockets 12.

Glass fibres 20 to be connected in abutting relationship to opposed glass fibres 22 are shown in position in Fig. 2. The glass fibre 20 or 22 is inserted through the rear of its housing part and advanced to the end of the appropriate male member 14, and the other glass fibre of the pair 20 or 22 is inserted into the rear of its housing part and advanced to the end of the appropriate holding element 24 at the bottom of the socket 12 in the other case. The length of the fibre 20, 22 which is to be included within the connector has the outer protective coating removed therefrom. Thus, the fiber 20, 22 within the connector consists of the glass or plastic fibre itself without its cladding still on. The housing halves 10, 16 can be altered to accommodate fibres with the outer sheath remaining on. However, the outer sheath is not put on in a tightly controlled manner and the concentricity may be lost due to asymmetry of the sheath.

As can be seen from Fig. 1 and 2, the housing halves 10, 16 comprise upstanding walls 18, 19 and a similarly shaped but slightly larger recess 21. As the two housing halves are fitted together the walls 18, 19 of each half enter and slidingly fit in the recess 21 of the other half. The surfaces 30 of the walls 18, 19 determine the alignment of the two parts and provide guide surfaces giving the necessary alignment of the male and female elements 14, 12. The surface 26 limits the axial movement of the housing halves.

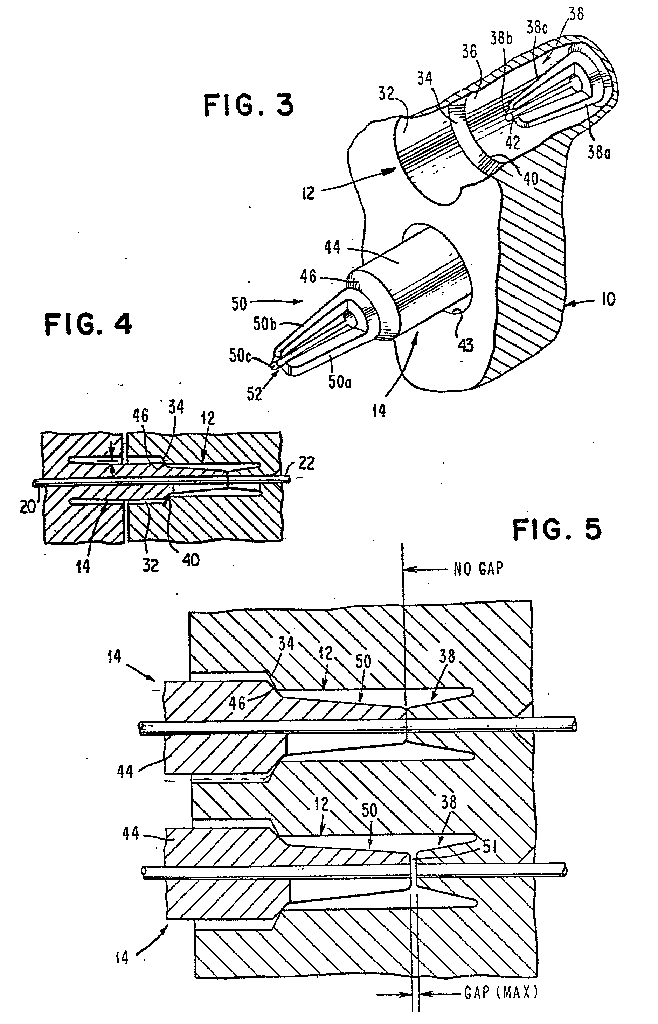

An enlargement of one of the sockets 12 shown in Fig 1 is depicted in isometric form in Fig. 3. Wider diameter portion 32 of the socket 12 extends from the opening of the socket in the face of the housing half 10 to the backward facing shoulder 34. If the male member 14 and the socket 12 happen to be exactly axially aligned as the male member enters the socket, the male member would pass axially down the middle of this wider diameter portion 32. However, the manufacturing and other tolerances often result in the male member 12 being offset somewhat from the exact centre of the larger diameter portion 32. When this happens the walls of the larger diameter portion 32 can act as a guidance means for the male member until the shoulder 34 is contacted. A smaller diameter portion 36 extends from the backward facing shoulder 34 to the bottom of the receptacle. The backward facing shoulder 34 has a considerable slope or taper from the larger diameter portion 32 to the smaller diameter portion 36. A three pronged holding member 38 is located in the centre of the smaller diameter portion 36. The member 38 extends from the bottom of the receptacle 12 to adjacent the shoulder 34. The longitudinal centre axis of the three pronged member 38 coincides with the central axis of the smaller diameter portion 36 of the socket 12. In this example, the bottom edge 40 of the backward facing shoulder 34 forms an accurately positioned, concentric, circular guidance edge within the socket 12. This edge, in this example, centres, the male member 14. The distance from the top of the three prong members 38 a, b, c, to the bottom edge 40 of the shoulder 34 must be substantially fixed so that when the male member 14 is fully inserted within the socket 12, the end of the fibre 20 held by the male member will abut the end of the fibre 22 held by the three beam member 38. Due to molding and machining tolerances some gaps may exist between the aligned fibre ends but a gap below a predetermined limit can be tolerated. It should be noted taht the three pronged member 38 within the socket 12 is made of a resilient flexible material such that the end opening 42 between the 120° displaced prongs 38 a, 38 b and 38 c can accommodate various diameter fibres. The initial design is such that the opening 42 within the three pronged member 38 is designed to hold the smallest diameter fibre to be used adjacent the end thereof so that the end face of the fibre is available for abutting with a fibre end to be connected thereto. The end face of the fibre is substantially in the plane of the ends of the three prongs 38 a, b, c.

An enlargement of one of the male members 14 is similarly shown in Fig. 3. The male member 14 consists of a larger diameter shaft or beam 44 which extends from within the housing to a forward facing shoulder 46. As can be seen best in Figs. 2 and 3 the male member 14 is recessed and protrudes from an annular well or recess 43. This gives an effective increase in length of the larger diameter portion 44 of the male member that is necessary to obtain the required flexing for a flat abutting of the fibre ends to be connected. This will be subsequently discussed in more detail.

The shoulder 46 on the male member 14 is tapered forwards in a forward direction and connects the larger diameter portion 44 to a smaller diameter three pronged member 50. As in the case of the three pronged member 38 within the socket 12 the three prongs 50 a, 50 b and 50 c are located 120° apart and form a holding member for centering and holding the end of fibre 20 as can be seen best in Fig. 2. The three pronged member 50 is made of a resilient material and tapers to a central opening 52 which is of a sufficiently small diameter to hold the smallest diameter fibre to be used. The resiliency of each of the three prongs 50 a, 50 b and 50 c enables deflection thereof so that a larger diameter fibre can be gripped. It should be noted that the backward slope of the forward facing shoulder 46 on the male member 14 is not as steep as the slope of the backward facing shoulder 34 in the socket. This is best shown in Fig. 5. When the male member 14 is guided into the opposite socket 12, the shoulder 46 on the male member 14 contacts the critical guidance edge 40 on the smaller diameter portion 36 of the socket 12, which acts both as a stop to limit entry of the male member 14 and as a guide providing a centering effect. The edge 40 also forces the prongs 50 a, b, c to grip the fibre 22.

Figure 4 is an exaggerated illustration showing the flexible male member 14 and socket 12 making an abutting end-to-end connection between optical fibres 20, 22. The male member is considerably bent over the portion 44 of its length as a result of the centering action caused by the coaction of the shoulder 46 of the male member 14 and the guidance edge 40 on the socket 14. The displacement is diagrammatically shown in Figure 4 as the space between the arrow heads. It can also be seen from Figure 4 that the centering action between the shoulder 46 of the male member and the guidance edge 40 of the socket causes bending of the male member along the larger diameter beam portion 44. This bending substantially compensates for any axial offset in alignment between the male member 14 and socket 12 caused by manufacturing or other tolerances. Without such centering, the radial end surfaces of the fibres held by the respective male member 14 and socket 12 would be axially offset and would not abut in a plane perpendicular to the axis. The diameter of the wider portion 32 of the socket 12 is larger than the diameter of the wider portion 44 of the male member 14 so that there is an annular space, effectively a continuation of the annular well 43, in which the male member can bend or flex along its longitudinal axis. We have found that the cooperation of the central guidance edge 40 of the socket 12 and the sloped shoulder 46 of the male member 14 produces a satisfactory coaxial abutting optical connection between the fibres held in the respective members 38, 50. However, as illustrated in Figure 5, for a connector having a multiplicity of pairs of optical fibres the machining and molding tolerances may cause a gap 51 between the axially aligned ends of some of the pairs of fibres. This gap 51 may extend from a minimum, that is no gap to a maximum gap of about $5 \times 10^{-5}$ metres. The $5 \times 10^{-5}$ metres maximum gap produces approximately a 1.8 db loss. This illustrates that both the length of the three pronged member 50 of the male member 14 and the length of the three pronged member 38 of the socket 12 are important and need to be accurately controlled. If they are too short the inter-fibre gap may exceed the maximum gap and if too long may abut and prevent proper centering of the male member in the socket.

As can be seen from the foregoing, the described coupling is a multi-connector for a plurality of fibre optic pairs in which the fibres are axially abutting in the same (or closely adjacent) vertical plane(s) regardless of any offset due to manufacturing tolerances.

It will be appreciated that the housing halves do not necessarily have to be identical. Thus, one housing half could contain sockets only and the other housing half could contain only opposite located male members. The two housing halves should inter-engage by having guidance and locating surfaces to give the rough alignment or mating of the male members with the opposite sockets.

**Claims**

1. A connector for optically coupling together in end-to-end relationship a pair of elongated light transmitting elements, said connector comprising two releasably engagable coupling parts (10, 16), one coupling part providing a socket (12) in which an end portion of one of the pair of light elements (20, 22) is centered, the other coupling part providing a spigot (14) in which an end portion of the other light element is centered and said coupling parts having coacting, tapering surfaces (34, 46) centering the spigot in the socket, characterised in that the co-acting tapering surface (46) on the said other coupling part is spaced from the projecting end of the spigot (14) and in that the spigot (14) is sufficiently flexible to permit any necessary deformation thereof as the spigot is centered in the socket by the coaction of the tapering surfaces.

2. A connector for optically coupling together in end-to-end relationship a multiplicity of pairs of elongated light transmitting elements, said connector comprising two releasably engagable coupling parts (10, 16), one coupling part providing a multiplicity of sockets (12) and/or spigots (14) in each of which an end portion of a respective one of the multiplicity of pairs of light elements (20, 22) is centered, the other coupling part providing a multiplicity of spigots (14) and/or sockets (12) in each of which an end portion of a respective one of the other multiplicity of light elements is centered and said coupling parts having a multiplicity of co-acting, pairs of tapering surfaces, (34, 46), one for each pair of light elements, centering each spigot in its socket, characterised in that the co-acting tapering surface (46) on each spigot (14) is spaced from the projecting end of the spigot and in that each spigot (14) is sufficiently flexible to permit any necessary deformation thereof as all the spigots are centered simultaneously in their appropriate sockets by the co-action of the respective tapering surfaces.

3. A connector as claimed in claim 1 or 2, further characterised in that the tapering surface (46) on the or each spigot (14) subtends a smaller angle than the tapering surface (34) on the corresponding socket (12) so that there is substantially line contact between the tapering surfaces.

4. A connector as claimed in claim 1, 2 or 3, further characterised in that the or each spigot (14) comprises a tubular shank portion (44) from the end of which three resiliently deflectable arms or prongs (50a, b, c) are cantilevered, the free ends of the arms or prongs centering and gripping the end of the light element.

5. A connector as claimed in claim 4, further characterised in that the root of each spigot (14) is encircled by a deep groove or well (43) formed in the coupling member.

6. A connector as claimed in any one of claims 1 to 5, further characterised in that the or each socket (12) comprises three resiliently deflectable arms or prongs (38a, b, c) cantilevered from the base of the socket into the socket recess, centering and gripping the end of the light element.

7. A connector as claimed in any one of claims 1 to 6, further characterised in that the coupling parts comprise inter-fitting elements (19, 21) such that the parts can only be engaged when those elements inter-fit and the or each spigots and socket pair are substantially aligned.

**Revendications**

1. Dispositif pour connecter optiquement entre-elles les extrémités d'au moins deux éléments de transmission de lumière allongés, ce dispositif de connexion comprenant deux éléments de connexion amovibles (10, 16), un de ces éléments de connexion comportant und douille (12) dans laquelle une extrémité de l'un des deux éléments lumineux (20, 22) est centrée et l'autre élément de connexion comportant une partie mâle (14) dans laquelle une extrémité de l'autre élément lumineux est centrée, lesdits éléments de connexion présentant des surfaces coniques associées (34, 46) centrant la partie mâle dans la douille, caractérisé en ce que: la surface conique associée (46) du deuxième élément de connexion est éloignée de l'extrémité avant de la partie mâle (14), et en ce que la partie mâle (14) est suffisamment flexible pour se déformer afin de permettre le centrage de la partie mâle dans la douille grâce à l'action mutuelle des surfaces coniques.

2. Dispositif pour connecter optiquement entre-elles les extrémités de plusieurs couples d'éléments de transmission de lumière allongés, ce dispositif de connexion comprenant deux éléments de connexion amovibles (10, 16), un de ces éléments de connexion comportant plusieurs douilles (12) et/ou parties males (14) dans chacune desquelles une extrémité de l'un des éléments de transmission de lumière. formant l'un des groupes de couples d'éléments de transmission de lumière (20, 22) est respectivement centrée, l'autre élément de connexion comportant plusieurs parties mâles (14) et/ou douilles (12) dans chacune desquelles une extrèmité de l'un des éléments de transmission de lumière, formant l'autre groupe de couples d'éléments de transmission de lumière, est respectivement centrée, lesdits éléments de connexion présentant plusieurs couples de surfaces coniques associées (34, 46), un coúple de surfaces coniques pour chaque couple d'éléments de transmission de lumière, centrant chaque partie mâle dans sa douille, caractérisé en ce que: la surface conique associée (46) sur chaque partie mâle (14) est à une certaine distance de l'extrémité avant de la partie mâle, et en ce que chaque partie mâle (14) est suffisamment flexible pour se déformer afin de permettre le centrage simultané de toutes les parties mâles dans leurs douilles appropriées grâce à l'action ,mutuelle des surfaces coniques respectives.

3. Dispositif selon la revendication 1 ou 2 caractérisé en outre en ce que la surface conique (46) de la ou de chaque partie mâle (14) sous-tend un angle plus petit que celui sous-tendu par la surface conique (34) de la douille correspondante (12) de telle sorte que les surfaces coniques ont pratiquement un contact linéaire.

4. Dispositif selon l'une quelconque des .revendications 1 à 3 caractérisé en outre en ce que la ou chaque partie mâle (14) comprend une partie lisse cylindrique (44) de l'extrémité de laquelle partent trois bras flexibles (50a, b, c) disposés en porte-à-faux, les extrémités libres de des bras centrant et serrant l'extrémité de l'élément.

5. Dispositif selon la revendication 4 caractérisé en outre en ce que la base de chaque partie mâle (14) est entourée par une gorge profonde (43) usinée dans l'élément de connexion.

6. Dispositif selon l'une quelconque des revendications 1 à 5 caractérisé en outre en ce que la ou chaque douille (12) comprend trois bras flexibles (38a, b, c) partant en porte-à-faux de la base de la douille dans le logement de la douille, pour centrer et bloquer l'extrémité de l'élément de transmission de lumière.

7. Dispositif selon l'une quelconque des revendications 1 à 6 caractérisé en outre en ce que les éléments de connexion comprennent des éléments d'assemblage (19, 21) qui font que les éléments de connexion ne peuvent être associés qu'avec des éléments correspondants et que la ou chaque partie mâle est pratiquement alignée avec le ou chaque douille.

**Patentansprüche**

1. Steckverbindung für die optische Kopplung mindestens eines Paares aneinander anstoßender, langgestreckter, lichtübertragender Elemente, welche aus zwei lösbar miteinander verbindbaren Kupplungsteilen (10, 16) besteht, wobei eines der Kupplungsteile aus einer Buchse (12) besteht, in der ein Endabschnitt eines der lichtübertragenden Elemente (20, 22) zentriert ist, während das andere Kupplungsteil einen Steckerstift (14) aufweist, in dem ein Endabschnitt des anderen lichtübertragenden Elements zentriert angeordnet ist, wobei die Kupplungsteile miteinander zusammenwirkende, sich verjüngende Oberflächen (34, 46) aufweisen, die den Steckerstift in der Buchse zentrieren, dadurch gekennzeichnet, daß die sich verjüngende Oberfläche (46) des anderen Kupplungsteils von dem überstehenden Ende des Steckerstiftes (14) einen Abstand aufweist und daß der Steckerstift (14) ausreichend biegsam ist und damit die notwendige Verformung gestattet, wenn der Steckerstift in der Buchse durch das Zusammenwirken der sich verjüngenden Oberflächen zentriert wird.

2. Steckverbindung für die optische Kopplung einer Vielzahl aneinanderstoßender Paare von langgestreckten, lichtübertragenden Elementen, welche zwei lösbar miteinander in Eingriff bringbare Kupplungsteile (10, 16) aufweist, wobei ein Kupplungsteil eine Vielzahl von Buchsen (12) und/oder Steckerstifte (14) aufweist, in denen jeweils ein Endabschnitt eines entsprechenden, der Vielzahl von paarweise vorgesehenen lichtübertragenden Elementen (20, 22) zentriert ist, während das andere Kupplungsteil mit einer Vielzahl von Steckerstiften (14) und/oder Buchsen (12) versehen ist, in denen jeweils ein Endaschnitt des entsprechenden anderen der anderen Vielzahl von lichtübertragenden Elementen zentriert ist, wobei die Kupplungsteile eine Vielzahl von paarweise zusammenwirkenden, sich verjüngenden Oberflächen (34, 46), jeweils für jedes Paar von lichtübertragenden Elementen, aufweisen, die jeden Steckerstift in seiner Buchse zentrieren, dadurch gekennzeichnet, daß die sich verjüngende Oberfläche (46) jedes Steckerstiftes (14) von dem überstehenden End des jeweiligen Steckerstiftes (14) einen Abstand aufweist und daß jeder Steckerstift (14) so biegsam ist, daß alle Steckerstifte, wenn sie gleichzeitig in ihren zugehörigen Buchsen durch das Zusammenwirken der jeweiligen, sich verjüngenden Oberflächen gleichzeitig zentriert werden, die notwendige Verformung durchzuführen in der Lage sind.

3. Steckverbindung nach Anspruch 1 oder 2, dadurch gekennzeichnet, daß die sich verjüngende Oberfläche (46) auf einem oder jedem der Steckerstifte (14) einen kleineren Winkel überspannt als die sich verjüngende Oberfläche (34) der entsprechenden Buchse (12), so daß zwischen den sich verjüngenden Oberflächen eine im wesentlichen linienförmige Berührung erfolgt.

4. Steckverbindung nach Anspruch 1, 2 oder 3, weiter dadurch gekennzeichnet, daß der Steckerstift (14) bzw. jeder Steckerstift (14) einen rohrförmigen Schaftabschnitt (44) aufweist, von dessen Ende drei federnd verbiegbare Arme oder Zinken (50a, b, c) freitragend ausgehen, wobei die freien Enden der Arme oder Zinken das Ende des lichtübertragenden Elementes zentrieren und ergreifen.

5. Steckverbindung nach Anspruch 4, dadurch gekennzeichnet, daß an der Wurzel eines jeden Steckerstiftes (14) eine kreisförmige, tiefe Nut oder Vertiefung (43) in dem Kupplungsteil angeordnet ist.

6. Steckverbindung nach einem der Ansprüche 1 bis 5, weiter dadurch gekennzeichnet, daß die Buchse (12) oder jede Buchse (12) drei federnd verbiegbaren Armen oder Zinken (38a, b, c) enthält, die freitragend von der Basis der Buchse in die Ausnehmung der Buchse hineinragen und das Ende des lichtübertragenden Elementes zentrieren und ergreifen.

**0 002 565**

7. Steckverbindung nach einem der Ansprüche 1 bis 6, weiterhin dadurch gekennzeichnet, daß die Kupplungsteile aus ineinander passenden Elementen (19, 21) bestehen, so daß sie nur mit damit zusammenpassenden Teilen zusammengefügt werden können und daß jeweils dabei Steckerstifte und Buchsen paarweise im wesentlichen miteinander ausgerichtet sind.

# FIG. 1

# FIG. 2

FIG. 3

FIG. 4

FIG. 5